# EUROPEAN PATENT SPECIFICATION

(11) **EP 3 623 676 B1**
(45) Date of publication and mention of the grant of the patent: **23.02.2022**
(21) Application number: 19196767.8
(22) Date of filing: 11.09.2019
(51) Int. Cl.: F16L 11/08, B29C 53/78

(54) **MANUFACTURING METHOD OF A FLEXIBLE SPIRAL HOSE**
HERSTELLUNGSVERFAHREN EINES SPIRALSCHLAUCHS
PROCÉDÉ DE FABRICATION D'UN TUYAU FLEXIBLE SPIRALÉ

(30) Priority: 12.09.2018 IT 201800008525
(43) Date of publication of application: 18.03.2020
(73) Proprietor: RR ITALIA SOCIETA' PER AZIONI, 62100 Macerata (MC) (IT)
(72) Inventor: RAPANELLI, Riccardo, 62100 Macerata (MC) (IT)
(74) Representative: Cutropia, Gianluigi

(56) References cited:
- DE-A1- 4 307 713
- DE-U1- 8 437 910
- US-A- 4 140 154
- US-A- 5 765 599

## Description

The present patent application for industrial invention relates to a process for manufacturing a flexible spiraled hose for the passage of a fluid used for agricultural or industrial purposes.

In this description a flexible spiraled hose is a hose provided with a reinforcing spiral for the entire length of the hose.

As it is known, spiraled hoses are used in several applications, for example for extracting multiple types of liquids or fumes, as well as for delivering a liquid or a granular element under pressure by means of pumps. Fields of application are very different, and multipurpose hoses are manufactured according to the prior art, together with hoses that are specifically designed for the nautical market, for the wine-making industry, for fuel, for agricultural use, for draining purposes, etc.

The hoses used in these sectors have to be flexible and extremely resistant. Because of such a requirement, spiraled holes are used because the spiral increases the strength of the flexible hose.

This description continues with reference to Figures 1 to 3, which illustrate a traditional flexible spiraled hose. With reference to the figures of the prior art:
- Fig. 1 is an axonometric view of a portion of a flexible spiraled hose according to the priori art;
- Fig. 2 is a view of a portion of the flexible spiraled hose of Fig. 1 sectioned along a plane passing through the longitudinal axis of the hose;
- Fig. 3 is a view of the flexible spiraled hose of Fig. 1 sectioned along a plane orthogonal to the longitudinal axis of the hose.

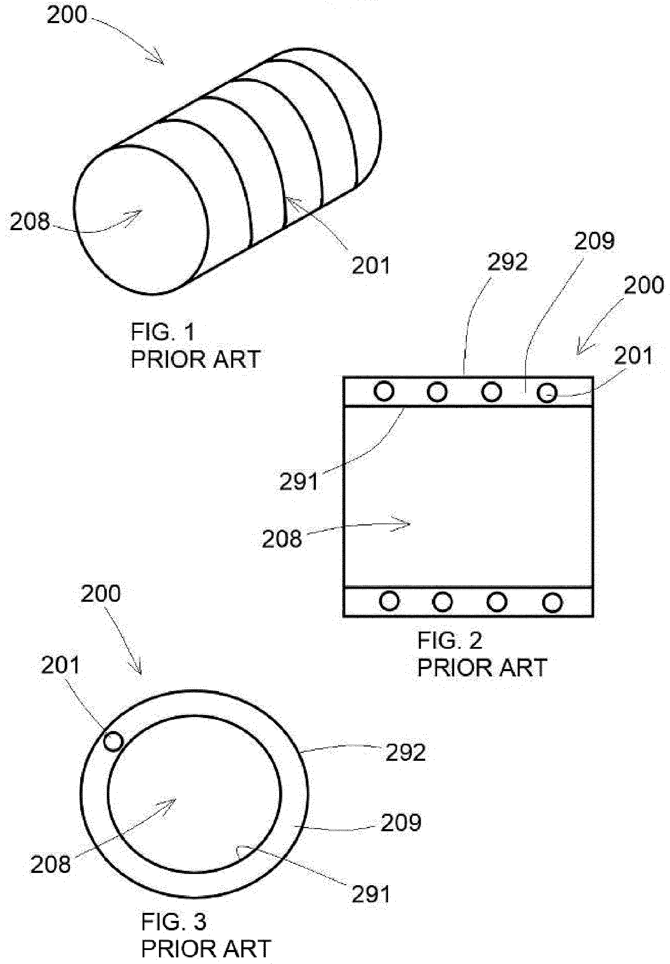

With reference to Figs. 1, 2 and 3, the flexible spiraled hose (200) according to the prior art is suitable for delivering a fluid and comprises a central conduit (208) and a lateral wall (209) that defines the central conduit (208).

The lateral wall (209) comprises an internal side (291) and an external side (292).

The flexible spiraled hose (200) comprises a single thread-like element (201) that is wound along a spiraled trajectory for the entire length of the flexible spiraled hose (200).

The single thread-like element (201) that is wound along the spiraled trajectory is completely immersed in a soft material.

The single thread-like element (201) is usually made of a rigid polymeric material, such as for instance rigid PVC.

The flexible spiraled hose (200) according to the prior-art is manufactured by co-extruding a soft material and a rigid material in such a way to obtain a shaped piece that internally comprises the single thread-like element (201).

Then, the section is wound aroung a winding device according to a spiraled trajectory, in such a way to obtain the flexible spiraled hose (200) according to the prior art, with the single thread-like element (201) immersed in the soft material.

The soft material in which the thread-like element (201) is immersed is a polymeric material, or a synthetic rubber, a natural rubber or a thermoplastic material.

The single thread-like element (201) guarantees a high resistance to the pressure exerted inside the flexible spiraled hose (200) when used to deliver the fluid by means of a pump. In particular, a pump connected to the flexible spiraled hose (200) can exert a higher or a lower pressure inside the flexible spiraled hose (200), in such a way to damage the flexible spiraled hose (200), which can explode. Moreover, the thread-like element (201) acts as anti-compression element when a user accidentally steps over the flexible spiraled hose (200) according to the prior art or when the flexible spiraled hose (200) is used for extraction purposes, i.e. when the pump connected to the flexible spiraled hose (200) generates a negative pressure that creates vacuum inside the flexible spiraled hose (200), thus compressing the flexible spiraled hose (200) according to the prior art.

The presence of the single thread-like element (201) is fundamental to determine the resistance to explosion, compression and vacuum. In fact, the provision of the thread-like element (201) in the flexible spiraled hose (200) will increase its resistance to explosion, compression and vacuum. However, a large amount of the thread-like element (201) will heavily impair the flexibility and easy handling of the flexible spiraled hose (201).

The amount of the single thread-like element (201) in the flexible spiraled hose (200) can be managed based on the diameter of the single thread-like element (201) and on the distance between the turns of said spiraled trajectory of the single thread-like element (201).

The lower the distance between the turns of the spiral, the more thread-like element (201) will be provided in the flexible spiraled hose (200) according to the prior art.

Advantages or disadvantages are experienced according to the smaller or larger presence of the single thread-like element (201). More precisely, in case of a larger presence of the single thread-like element (201), the flexibility of the hose will be impaired, and the hose will be not suitable for being used in conduits or sharp narrow spaces. On the contrary, in case of a smaller presence of the single thread-like element (201), the resistance of the hole will be impaired and the flexible spiraled hose (200) according to the prior art will be more likely to explode or get damaged if an excessive pressure is exerted on the hose by means of a pump.

US5765599 **discloses an elastic milking machine hose having an end portion which is radially expanded and applied on a tubular nipple, the outer diameter of which exceeds the inner diameter of the hose.**

DE8437910 **discloses a rubber hose having a reinforcement insert.**

The purpose of the present invention is to eliminate the drawbacks of the prior art by disclosing a process for manufacturing a flexible spiraled hose that is practical to use, flexible and inexpensive.

These purposes are achieved according to the invention with the characteristics of the appended independent claim 1.

Advantageous embodiments appear from the dependent claims. The manufacturing process of a flexible spiraled hose for the passage of a fluid is defined by claim 1.

For the sake of clarity, the description of the process according to the invention continues with reference to the attached drawings, which have a merely illustrative, not limiting value, wherein:
Fig. 1 is a diagrammatic perspective view of a portion of a flexible spiraled hose according to the prior art;
Fig. 2 is a view of the flexible spiraled hose of Fig. 1 sectioned along a plane passing through the longitudinal axis of the hose;
Fig. 3 is a view of the flexible spiraled hose of Fig. 1 sectioned along a plane orthogonal to the longitudinal axis of the hose;

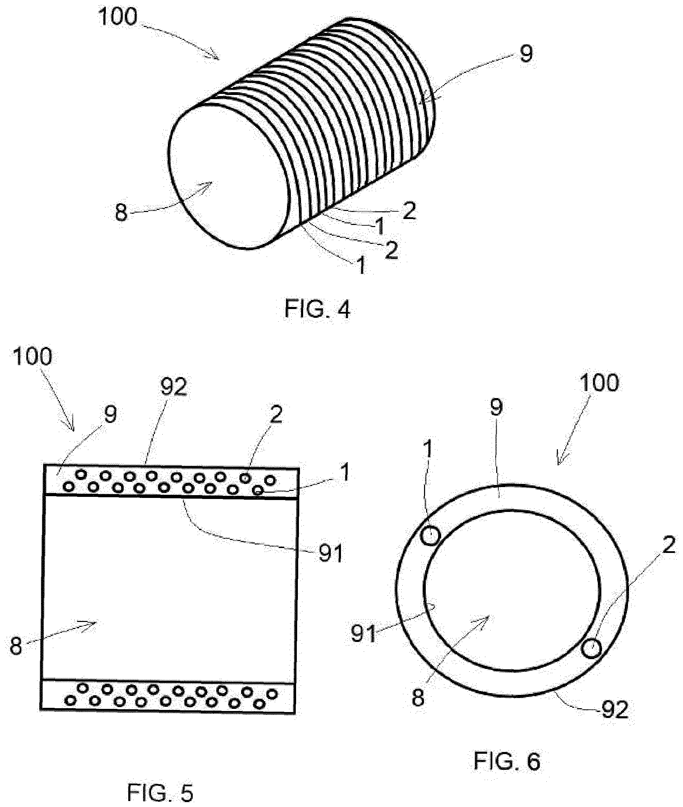

Fig. 4 is a diagrammatic perspective view of a portion of a flexible spiraled hose obtained with the process of the invention;
Fig. 5 is a view of the flexible spiraled hose of Fig. 4 sectioned along a plane passing through the longitudinal axis;
Fig. 6 is a view of the flexible spiraled hose of Fig. 4 sectioned along a plane orthogonal to the longitudinal axis of the hose;

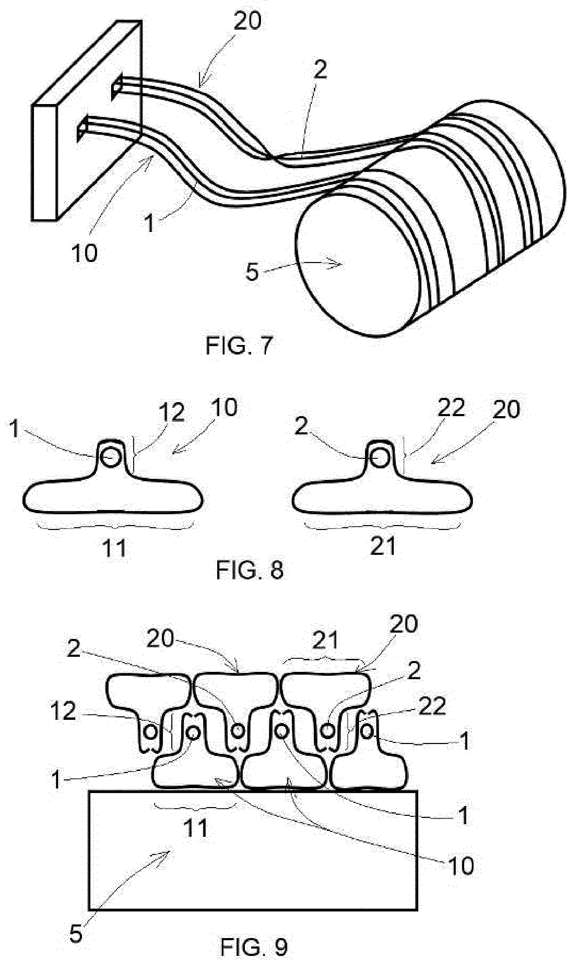

Fig. 7 is a diagrammatic view of the manufacturing process of the flexible spiraled hose according to the invention;
Fig. 8 is a diagrammatic cross-sectional view of a first shaped piece and a cross-sectional view of a second shaped piece;
Fig. 9 is a diagrammatic view of an arrangement of the first shaped piece and of the second shaped piece on a winding device.

With reference to Figs. 4, 5 and 6, a flexible spiraled hose obtained with the process according to the invention is disclosed, which is generally indicated with reference numeral (100).

The flexible spiraled hose (100) is suitable for delivering a fluid, such as water, compressed air or gas.

With reference to Figs. 4 and 5, the flexible spiraled hose (100) according to the invention comprises a central conduit (8) and a lateral wall (9) that defines the central conduit (8).

The flexible spiraled hose (100) has a substantially cylindrical shape.

The lateral wall (9) has an internal side (91) and an external side (92); the internal side (91) is suitable for being in contact with the fluid delivered by the flexible spiraled hose (100).

The flexible spiraled hose (100) comprises a first thread-like element (1) that is wound according to a spiraled trajectory in the lateral wall (9) near the internal side (91).

Moreover, the flexible spiraled hose (100) comprises a second thread-like element (2) that is wound along a spiraled trajectory in the lateral wall (9) near the external side (92).

Said first thread-like element (1) and said second thread-like element (2), which are disposed in a spiraled arrangement, have the same diameter and are made of a solid, rigid material.

Preferably, the solid rigid material is a polymeric material, such as rigid PVC, which gives a high explosive and compressive strength to the flexible spiraled hose (100).

The first thread-like element (1) and the second thread-like element (2) are immersed in a soft material, which is contained in the lateral wall (9), such as for example a polymeric material (PVC, PU, POLYESTER or the like), natural rubber, synthetic rubber or thermoplastic materials.

The soft material gives the capability of bending and being flexible to the flexible spiraled hose (100).

Advantageously, the trajectory of the first thread-like element (1) and the trajectory of the second thread-like element (2) have the same pitch and are staggered.

Preferably, the fact that the trajectories are staggered by 180° allows for having, in cross-section, the presence of the first thread-like element (1) and of the second thread-like element (2) in diametrically opposite positions along the entire lateral wall (9) of the flexible spiraled hose (100), as shown in Fig. 6.

With reference to Figs. 7, 8 and 9, the flexible spiraled hose (100) is obtained with the process according to the invention.

According to this process, a first shaped piece (10) and a second shaped piece (20) are extruded.

More precisely, the first shaped piece (10) is obtained by co-extruding a soft material and a rigid material and is preferably provided with a substantially T-shaped cross-section.

Said first shaped piece (10) is co-extruded in such a way to comprise the first thread-like element (1) that is made of the rigid material and is completely surrounded by the soft material.

With reference to Fig. 8, the basically T-shaped cross-section of the first shaped piece (10) comprises a main base wing (11) and a secondary central wing (12).

Said second thread-like element (1) is disposed in the secondary central wing (12) of the first shaped piece (10).

The second shaped piece (20) is obtained by co-extruding a soft material and a rigid material and is preferably provided with a substantially T-shaped cross-section.

Said second shaped piece (20) is co-extruded in such a way to comprise the second thread-like element (2) that is made of the rigid material and is completely surrounded by the soft material.

With reference to Fig. 8, the basically T-shaped cross-section of the second shaped piece (20) comprises a main base wing (21) and a secondary central wing (22).

The second thread-like element (2) is disposed in the secondary central wing (22) of the second shaped piece (20).

With reference to Fig. 7, the first shaped piece (10) is disposed in a winding device (5), placing the main wing (11) of the first shaped piece (10) in contact with the winding device (5) and placing the secondary central wing (12) upwards.

Then, the winding device (5) is activated and rotated in such a way to wind the first shaped piece (10) around the winding device along a spiraled trajectory, putting the main wings (11) of the adjacent turns of the first shaped piece (10) in mutual contact.

With reference to Fig. 9, after rotating the winding device (5), the second shaped piece (20) is disposed on the winding device (5), placing the second shaped piece in overturned position relative to the first shaped piece (10). In particular, the second shaped piece is disposed on the winding device (5) in such a way that the main wing (21) of the second shaped piece (20) faces the exterior of the winding device (5), and the secondary wing (22) of the second shaped piece (20) is positioned in a point in which the main wings (11) of the adjacent turns of the first shaped piece (10) are in mutual contact, in a preferably parallel position relative to the main wing (11) of the first shaped piece (10).

Because of the high temperature of the shaped pieces (10, 20) that come from an extruder, during the winding, the soft material of each turn tends to melt with the soft material of the adjacent spiral, thus obtaining a flexible spiraled hose (100) with the two thread-like elements (1, 2) completely immersed in the soft material, with spiraled trajectories in staggered position.

Preferably, the two shaped pieces (10, 20) are wound in such a way that the spiraled trajectories of the two thread-like elements (1, 2) are staggered by 180°.

Because of the opposite position of the first shaped piece (10) and of the second shaped piece (20), the main wing (11) of the first shaped piece (10) is disposed on the internal side (91) of the lateral wall (9) of the flexible spiraled hose (100), whereas the main wing (21) of the second shaped piece (20) is disposed on the external side (92) of the lateral wall (9), in such a way that the internal side (91) and the external side (92) of the lateral wall (9) of the flexible spiraled hose (100) have a substantially smooth surface without projections.

It must be noted that, although T-shaped sections are shown in Fig. 8 and 9, the first shaped piece and the second shaped piece (10, 20) can have any shape, such as rectangle, rhombus or triangle.

Preferably, the first thread-like element (1) and the second thread-like element (2) of the flexible spiraled hose (100) comprise a section with a considerably lower diameter than the diameter of the section of the single thread-like element (201) of the flexible spiraled hose (200) according to the prior art. As a matter of fact, the single thread-like element (201) of the flexible spiraled hose (100) according to the prior art has a diameter of approximately 4 - 4.5 mm, preferably 4.2 mm, whereas the first thread-like element and the second thread-like element (1, 2) of the flexible spiraled hose (200) according to the invention have a diameter of approximately 2.7-3.2 mm, preferably 2.9 mm.

In view of the foregoing description, the advantages of the flexible spiraled hose (100) manufactured according to the process of the invention are evident.

Because of the provision of the first thread-like element and of the second thread-like element (1, 2) with a spiraled trajectory staggered by 180°, all portions of the flexible spiraled hose (100) are provided with the thread-like element (1,2).

A comparison between the flexible spiraled hose (100) of the invention and the flexible spiraled hose of the prior art shows that, with the same trajectory of the thread-like element, the provision of two thread-like elements in adjacent position increases the rigidity and the uniform flexibility of the flexible spiraled hose (100) of the invention, considering that its surface is entirely provided with at least one portion of one of said thread-like elements (1, 2). On the contrary, because of the fact that the second thread-like element (2) is not provided in the hose of the prior art, the distance between a pair of consecutive turns is more than two times the distance between a pair of consecutive turns of the flexible spiraled hose (100) according to the invention.

With reference to Fig. 1 and Fig. 4, the lateral wall (9) of the flexible spiraled hose (100) according to the invention (shown in Fig. 4) is almost completely covered by the thread-like element (1, 2), whereas the lateral wall (209) of the flexible spiraled hose (200) according to the prior art (shown in Fig. 1) comprises portions in which the single thread-like element (201) is completely omitted. The large provision of the thread-like element (1, 2) in the flexible spiraled hose (100) according to the invention provides the flexible spiraled hose (100) with uniform resistance properties on the entire lateral wall (9).

Moreover, with reference to Figs. 3 and 6, the cross-section of the flexible spiraled hose (200) according to the prior art is provided with the single thread-like element (201) in only one point of the lateral wall (209), whereas the cross-section of the flexible spiraled hose (100) according to the invention is provided with the first thread-like element (1) and the second thread-like element (2) in diametrically opposite positions, in such a way that the flexible spiraled hose (100) according to the invention has a symmetrical behavior in opposite bending directions, unlike the flexible spiraled hose (200) of the prior art.

The flexible spiraled hose (100) of the invention has a very high resistance to explosion and pressure, it being completely covered by the first thread-like element (1) and by the second thread-like element (2), it being at the same time provided with excellent flexibility properties because the first thread-like element (1) and the second thread-like element (2) have a lower diameter than the single thread-like element (201) of the flexible spiraled hose (200) according to the prior art.

Experimental tests have shown that:
- the flexible spiraled hose (100) according to the invention has a higher angle of curvature with a radius improvement of approximately 8%-10% compared to the flexible spiraled hose (200) of the prior art;
- the pressure resistance of the flexible spiraled hose (100) according to the invention is 2 bars higher than the pressure resistance of the flexible spiraled hose (200) of the prior art;
- the flexible spiraled hose (100) according to the invention has a compressive strength during extraction (vacuum) of approximately 9 M H2O, whereas the flexible spiraled hose (200) according to the prior art has a compressive strength during extraction of only 7 M H2O; therefore, also in the case of compressive strength during extraction, the values of the flexible spiraled hose (100) are considerably better than the ones of the flexible spiraled hose of the prior art.

The results of the experimental tests show that the provision of two thread-like elements (1, 2) wound along a spiraled trajectory considerably improves the strength of the flexible spiraled hoses without impairing their flexibility, in such a way that the flexible spiraled hose (100) of the invention is versatile and can be used in any type of environments.

In view of the above, based on the results of the experimental tests, evidently, such a flexible spiraled hose (100) can be used in several applications, for example to extract liquids, fumes, as well as to deliver a liquid or granular element under pressure by means of pumps.

Moreover, the flexible spiraled hose (100) of the invention is extremely inexpensive, considering that a considerably lower quantity of thread-like element is necessary to obtain the performance of the flexible spiraled hose (200) of the prior art.

Numerous variations and modifications can be made to the present embodiment of the invention, which are within the reach of an expert of the field, falling in any case within the scope of the invention as disclosed by the appended claims.

## Claims

1. Manufacturing process of a flexible spiraled hose (100) suitable for delivering a fluid;
said flexible spiral hose (100) comprising a central conduit (8), a lateral wall (9) having an internal side (91) and an external side (92), a first thread-like element (1) that is wound along a spiral trajectory in the lateral wall (9) near said internal side (91) and a second thread-like element (2) that is wound along a spiral trajectory in the lateral wall (9) near said external side (92);
said process comprising the following steps:
- extruding a first shaped piece (10) with substantially "T"-shaped section, provided with a main base wing (11) and a secondary central wing (12); said shaped piece (10) comprising a soft material and comprising the first thread-like element (1) in said secondary central wing (12);
- extruding a second shaped piece (20) with substantially "T"-shaped section, provided with a main base wing (21) and a secondary central wing (22); said section comprising a soft material and comprising the second thread-like element (2) in said secondary central wing (22);
- disposing said first shaped piece (10) in a winding device (5), putting the main wing (11) of the first shaped piece (10) in contact with the winding device (5) and placing the secondary central wing (12) outwards;
- rotating said winding device (5), winding said first shaped piece (10) on said winding device (5) along a spiraled trajectory, putting the main wings (11) of the adjacent turns of the first shaped piece (10) in mutual contact;
- disposed said second shaped piece (20) on the winding device (5), disposing the second shaped piece (20) in overturned position relative to the first shaped piece (10) and positioning the secondary central wing (22) of the second shaped piece (20) in such a way to face the first shaped piece (10), and the main base wing (21) of the second shaped piece (20) being disposed in such a way to face the exterior of the winding device (5), in preferably parallel direction relative to the main base wing (11) of the first shaped piece (10).

2. The process of claim 1, wherein the first shaped piece and the second shaped piece (10, 20) are wound on the winding device (5) in such a way that said first thread-like element (1) and said second thread-like element (2) originate turns with different diameter.

3. The process of claim 1 or 2, where the first shaped piece and the second shaped piece (10, 20) are wound on the winding device (4) in such a way that the spiraled trajectory of said first thread-like element (1) and of said second thread-like element (2) are staggered.

4. The process of claim 3, wherein the spiraled trajectory of said first thread-like element (1) and of said second thread-like element (2) are staggered by 180°.

5. The process of any one of claims 1 to 4, wherein the first shaped piece and the second shaped piece (10, 20) are wound on the winding device (5) in such a way that the spiraled trajectory of the first thread-like element (1) and the spiraled trajectory of the second thread-like element (2) have the same pitch.

## Patentansprüche

1. Verfahren zur Herstellung eines flexiblen Spiralschlauches (100), der zum Fördern eines Fluids bestimmt ist;
wobei der flexible Spiralschlauch (100) eine zentrale Leitung (8), eine Seitenwand (9) mit einer Innenseite (91) und einer Außenseite (92), ein erstes drahtförmiges Element (1), das entlang einer spiralförmigen Bahn in der Seitenwand (9) nahe der Innenseite (91) gewickelt ist, und ein zweites drahtförmiges Element (2), das entlang einer spiralförmigen Bahn in der Seitenwand (9) nahe der Außenseite (92) gewickelt ist, umfasst,
wobei das Verfahren folgende Schritte umfasst:
- Extrudieren eines ersten Profils (10) mit einem im Wesentlichen T-förmigen Querschnitt, das mit einem Basishauptflügel (11) und einem zentralen Nebenflügel (12) versehen ist; wobei das erste Profil (10) ein weiches Material umfasst und das erste drahtförmige Element (1) in dem zentralen Nebenflügel (12) umfasst;
- Extrudieren eines zweiten Profils (20) mit einem im Wesentlichen T-förmigen Querschnitt, das mit einem Basishauptflügel (21) und einem zentralen Nebenflügel (22) versehen ist; wobei der Querschnitt ein weiches Material umfasst und das zweite drahtförmige Element (2) in dem zentralen Nebenflügel (22) umfasst;
- Anordnen des ersten Profils (10) auf einer Wickelvorrichtung (5), wobei der Hauptflügel (11) des ersten Profils (10) im Kontakt mit der Wickelvorrichtung (5) positioniert wird und der zentrale Nebenflügel (12) nach außerhalb positioniert wird;
- Drehen der Wickelvorrichtung (5), wobei das erste Profil (10) auf der Wickelvorrichtung (5) entlang einer spiralförmigen Bahn gewickelt wird, wobei die Hauptflügel (11) der benachbarten Windungen des ersten Profils (10) in Kontakt miteinander gebracht werden;
- Anordnen des zweiten Profils (20) auf der Wickelvorrichtung (5), wobei das zweite Profil (20) in umgedrehter Position in Bezug auf das erste Profil (10) positioniert wird und der zentrale Nebenflügel (22) des zweiten Profils (20) derart positioniert wird, dass er zum ersten Profil (10) gerichtet ist, und der Basishauptflügel (21) des zweiten Profils (20) derart angeordnet wird, dass er nach außerhalb der Wickelvorrichtung (5), vorzugsweise parallel zum Basishauptflügel (11) des ersten Profils (10) gerichtet ist.

2. Verfahren nach Anspruch 1, wobei das erste Profil und das zweite Profil (10, 20) derart auf die Wickelvorrichtung (5) gewickelt werden, dass das erste drahtförmige Element (1) und das zweite drahtförmige Element (2) Windungen mit unterschiedlichem Durchmesser bilden.

3. Verfahren nach Anspruch 1 oder 2, wobei das erste Profil und das zweite Profil (10, 20) derart auf die Wickelvorrichtung (5) gewickelt werden, dass die spiralförmige Bahn des ersten drahtförmigen Elements (1) und des zweiten drahtförmigen Elements (2) versetzt sind.

4. Verfahren nach Anspruch 3, wobei die spiralförmige Bahn des ersten drahtförmigen Elements (1) und des zweiten drahtförmigen Elements (2) um 180° zueinander versetzt sind.

5. Verfahren nach einem der Ansprüche 1 bis 4, wobei das erste Profil und das zweite Profil (10, 20) derart auf die Wickelvorrichtung (5) gewickelt werden, dass die spiralförmige Bahn des ersten drahtförmigen Elements (1) und die spiralförmige Bahn des zweiten drahtförmigen Elements (2) dieselbe Steigung aufweisen.

## Revendications

1. Processus pour la réalisation d'un tuyau flexible spiralé (100) destiné à être traversé par un fluide ;
ledit tuyau flexible spiralé (100) comprenant un conduit central (8), une paroi latérale (9) ayant un côté interne (91) et un côté externe (92), un premier élément filiforme (1) qui est enroulé le long d'une trajectoire en spirale dans la paroi latérale (9) à proximité du dit côté interne (91) et un second élément filiforme (2) qui est enroulé le long d'une trajectoire en spirale dans la paroi latérale (9) à proximité du dit côté externe (92) ;
ledit processus comprenant les phases suivantes :
- extruder un premier profilé (10), de section essentiellement en « T », ayant une aile principale (11) de base et une aile secondaire centrale (12) ; ledit premier profilé (10) comprenant une matière souple et comprenant le premier élément filiforme (1), en correspondance de ladite aile secondaire centrale (12) ;
- extruder un second profilé (20), de section essentiellement en « T », ayant une aile principale (21) de base et une aile secondaire centrale (22) ; ledit second profilé (20) comprenant une matière souple et comprenant le second élément filiforme (2), en correspondance de ladite aile secondaire centrale (22) ;
- disposer ledit premier profilé (10) sur un dispositif de bobinage (5), en positionnant l'aile principale (11) du premier profilé (10) en contact avec le dispositif de bobinage (5) et en positionnant l'aile secondaire centrale (12) vers l'extérieur ;
- mettre en rotation ledit dispositif de bobinage (5) en enroulant ledit premier profilé (10) sur ledit dispositif de bobinage (5) selon une trajectoire en spirale, en positionnant les ailes principales (11) des spires adjacentes du premier profilé (10) en contact entre elles ;
- disposer ledit second profilé (20) sur le dispositif de bobinage (5) en positionnant le second profilé (20) en assiette renversée par rapport à l'assiette du premier profilé (10) et en positionnant l'aile secondaire centrale (22) du second profilé (20) orientée vers le premier profilé (10), et l'aile principale (21) de base du second profilé (20) orientée vers l'extérieur du dispositif de bobinage (5), avec une assiette préférablement parallèle par rapport à l'aile principale (11) de base du premier profilé (10).

2. Processus selon la revendication 1, où le premier et le second profilé (10, 20) sont enroulés sur le dispositif de bobinage (5) de façon à ce que ledit premier élément filiforme (1) et ledit second élément filiforme (2) forment des spires ayant des diamètres différents.

3. Processus selon la revendication 1 ou 2, où le premier et le second profilé (10, 20) sont enroulés sur le dispositif de bobinage (5) de sorte que les trajectoires en spirale du dit premier élément filiforme (1) et du dit second élément filiforme (2) soient déphasées.

4. Processus selon la revendication 3, où les trajectoires en spirale du dit premier élément filiforme (1) et du dit second élément filiforme (2) sont déphasées entre elles de 180°.

5. Processus selon l'une quelconque des revendications de 1 à 4, où le premier et le second profilé (10, 20) sont enroulés sur le dispositif de bobinage (5) de sorte que la trajectoire en spirale du premier élément filiforme (1) et la trajectoire en spirale du second élément filiforme (2) aient le même pas.
